# EUROPÄISCHE PATENTSCHRIFT

(11) **EP 3 581 013 B1**
(45) Veröffentlichungstag und Bekanntmachung des Hinweises auf die Patenterteilung: **18.11.2020**
(21) Anmeldenummer: 18177596.6
(22) Anmeldetag: 13.06.2018
(51) Int. Cl.: A01D 34/73, A01F 29/09

(54) **ANORDNUNG FÜR EIN MÄHWERK EINER MÄH- ODER HÄCKSELMASCHINE, ERSATZ-SCHNEIDWERKZEUG SOWIE MÄHWERK**
ASSEMBLY FOR A MOWER UNIT OF A MOWING OR SCHREDDING MASHINE, REPLACEMENT CUTTING UNIT AND MOWER
DISPOSITIF POUR UN DISPOSITIF DE COUPE OU DE HACHEUR, OUTIL DE COUPE DE REMPLACEMENT AINSI QUE DISPOSITIF DE COUPE

(43) Veröffentlichungstag der Anmeldung: 18.12.2019
(73) Patentinhaber: Kverneland Group Kerteminde AS, 5300 Kerteminde (DK)
(72) Erfinder: Nielsen, Rasmus Elmelund, 5892 Gudbjerg, Denmark (DK)
(74) Vertreter: Bittner, Thomas L.

(56) Entgegenhaltungen:
- EP-B1- 0 486 459
- DE-U1-202011 050 525
- FR-A1- 2 499 448
- US-A- 3 320 732

## Beschreibung

Die Erfindung betrifft eine Anordnung für ein Mähwerk einer Mäh- oder Häckselmaschine, ein Ersatz-Schneidwerkzeug sowie ein Mähwerk.

### Hintergrund

Mäh- oder Häckselmaschinen werden im landwirtschaftlichen oder gartenbaulichen Betrieb genutzt, um bodengewachsene Pflanzen zu mähen und / oder zu häckseln. Zu derartigen Pflanzen gehört insbesondere Gras. Zum Mähen oder Häckseln sind die Maschinen mit einem Mähwerk ausgestattet, welches die zum Mähen / Häckseln der Pflanzen notwendigen Bauteile vereinigt. Im Mähwerk sind die zum Schneiden der Pflanzen genutzten Schneidwerkzeuge an einem Werkzeugträger angeordnet, der im Betrieb üblicherweise in eine Rotationsbewegung versetzt wird. Ein solcher Werkzeugträger ist aus dem Dokument EP 0 486 459 B1 bekannt. Der dort beschriebene Werkzeugträger sieht vor, die Schneidwerkzeuge zu montieren, indem ein an dem Schneidwerkzeug aufgenommener Montagebolzen in ein am Werkzeugträger gebildetes Langloch eingeführt wird. Zur Befestigung wird der Bolzen dann relativ zur Rotationsachse des Werkzeugträgers aus einer zur Rotationsachse proximalen Stellung radial nach außen in eine zur Rotationsachse distale Stellung verschoben, derart, dass im distalen Endbereich des Langloches gebildete Verengungsabschnitte in eine zugeordnete Einschnürung am Montagebolzen eingreifen, sodass das Schneidwerkzeug an dem Werkzeugträger gesichert ist.

Ein weiteres Mähwerk offenbart das Dokument EP 1 588 599 B1. Dort ist der an dem Schneidwerkzeug aufgenommene Montagebolzen auf der Oberseite des Werkzeugträgers mit Hilfe eines ein Langloch aufweisenden Sicherungsbauteils befestigt, welches einseitig verengt ist. Im Betrieb kann das Schneidwerkzeug um eine mit Hilfe des Montagebolzens gebildete Rotationsachse schwenken, insbesondere dann, wenn das Schneidwerkzeug auf ein Hindernis trifft. Radial innenseitig zum Montagebolzen ist ein Anschlag gebildet, der diese Schwenkbewegung um den Montagebolzen des Schneidwerkzeugs begrenzt.

Im Dokument EP 2 522 209 B1 ist eine Anordnung für ein Mähwerk einer Mäh- oder Häckselmaschinemit einem Werkzeugträger beschrieben, welcher mit einer Trägerscheibe gebildet und konfiguriert ist, um eine Rotationsachse drehbar an einem Mähwerk einer Mäh- oder Häckselmaschine montiert zu werden. Die Anordnung weist Schneidwerkzeuge auf, die jeweils einem zur Rotationsachse radial außen liegendem Schneidmesser und einem zur Rotationsachse radial innen liegendem Halteabschnitt gebildet und in einem zugeordneten Trägerabschnitt lösbar an der Trägerscheibe montiert sind, wobei in den zugeordneten Trägerabschnitten ein zur Rotationsachse radial verlaufendes Langloch gebildet ist, in das in einem zur Rotationsachse proximalen Endbereich ein zum Montieren des Schneidwerkzeugs an dem Werkzeugträger genutzter Montagebolzen einführbar ist, und das Langloch zumindest in einem zur Rotationsachse distalen Endbereich Eingriffabschnitte aufweist, die entlang eines Langlochrandes gebildet sind und in eine Einschnürung an dem Montagebolzen eingreifen, wenn der im Halteabschnitt des Schneidwerkzeugs aufgenommene Montagebolzen beim Montieren der Schneidwerkzeugs aus dem proximalen Endbereich des Langlochs in den Bereich des Langlochs mit den Eingriffabschnitten verlagert ist. In den zugeordneten Trägerabschnitten sind einander gegenüberliegende und sich in Längsrichtung des Langloches erstreckende Vorsprünge gebildet, die eine Rotation des Schneidwerkzeugs um den Montagebolzen begrenzen oder im Wesentlichen vollständig unterbinden, wenigstens dann, wenn der im Halteabschnitt des Schneidwerkzeugs aufgenommene Montagebolzen in einer radial inneren Langlochhälfte angeordnet ist.

Aus dem Dokument US 3320732 ist ein Rasenmäher bekannt, bei dem Schneidmesser auf einem drehenden Werkzeugträger mittels Montagebolzen montiert sind. Der Werkzeugträger bildet eine Trägerscheibe, die im Betrieb rotiert, so dass die Schneidmesser um eine Rotationsachse umlaufen. Ein jeweiliger Montagebolzen ist an den Schneidwerkzeugen nicht lösbar montiert.

### Zusammenfassung

Aufgabe der Erfindung ist es, eine Anordnung für ein Mähwerk einer Mäh- oder Häckselmaschine, ein Ersatz-Schneidwerkzeug sowie ein Mähwerk anzugeben, mit denen die Betriebssicherheit verbessert ist, insbesondere hinsichtlich eines unbeabsichtigten Lösens eines Schneidwerkzeugs vom Werkzeugträger im Betrieb.

Zur Lösung ist eine Anordnung für ein Mäh- oder Häckselmaschine nach dem unabhängigen Anspruch 1 geschaffen. Anspruch 13 betrifft ein Ersatz-Schneidwerkzeug. Weiterhin ist ein Mähwerk für eine Mäh- oder Häckselmaschine nach dem unabhängigen Anspruch 14 vorgesehen. Ausgestaltungen sind Gegenstand von abhängigen Unteransprüchen.

Nach einem Aspekt ist Anordnung für ein Mähwerk einer Mäh- oder Häckselmaschine mit einem Werkzeugträger geschaffen, welcher mit einer Trägerscheibe gebildet und konfiguriert ist, um eine Rotationsachse drehbar an einem Mähwerk einer Mäh- oder Häckselmaschine montiert zu werden. Die Anordnung weist Schneidwerkzeuge auf, die jeweils mit einem zur Rotationsachse radial außen liegendem Schneidmesser und einem zur Rotationsachse radial innen liegendem Halteabschnitt gebildet und in einem zugeordneten Trägerabschnitt lös bar an der Trägerscheibe montiert sind, wobei die Schneidwerkzeuge an dem Werkzeugträger jeweils mittels eines Montagebolzens montiert sind. Der Montagebolzen ist an den Schneidwerkzeugen jeweils nicht lösbar montiert.

Die nicht lösbare Montage oder Anordnung des Montagebolzens bewirkt eine nicht (zerstörungsfrei) trennbare Befestigung mit Schneidwerkzeug, zum Beispiel einem Schneidmesser, und hieran montiertem Montagebolzen. Der Montagebolzen kann vom Schneidwerkzeug nicht getrennt werden, ohne den Montagebolzen und / oder das Schneidwerkzeug zumindest teilweise zu zerstören. Es ist so verhindert, dass bei Materialverschleiß von Schneidwerkzeug und / oder Montagebolzen eines der beiden Bauteile ausgetauscht wird, um das ausgetauschte Bauteil dann mit dem alten und insoweit ebenfalls schon wenigstens teilweise verschlissenen anderen Bauteil weiter zu nutzen. Es bestände dann die Gefahr eines nicht mehr sicheren Betriebs des Mähwerks.

Der Montagebolzen ist in einer nicht montierten Stellung des Schneidwerkzeugs in einer zugeordneten Öffnung des Schneidwerkzeugs relativ zu diesem verlagerbar angeordnet. Hierdurch kann eine lose oder bewegliche Montage des Montagebolzens in der Öffnung (Bolzenmontageöffnung) gebildet sein. Die Öffnung kann ein Lang- oder Rundloch sein.

Der Montagebolzen kann in der nicht montierten Stellung des Schneidwerkzeugs relativ zur Schneidwerkzeugfläche verkippbar in der zugeordneten Öffnung des Schneidwerkzeugs angeordnet sein. Der Montagebolzen kann hierbei zum Beispiel relativ zu seiner Längsachse verkippbar sein.

Gegenüberliegende Kopfenden des Montagebolzens, zwischen denen eine Einschnürung angeordnet ist, können jeweils eine Kopffläche aufweisen, die größer ist als eine Öffnungsfläche der Öffnung, in welcher der Montagebolzen angeordnet ist.

Der Montagebolzen kann mehrstückig ausgeführt sein. Die mehreren Bolzenstücke können miteinander gefügt sein, um den Montagebolzen an dem jeweiligen Schneidwerkzeug nicht lösbare zu befestigen.

Bei dem Montagebolzen können Hülsenbauteile mittels eines Kernstifts oder -bolzens nicht lösbar miteinander verbunden sein. Die Hülsenbauteile können im Bereich der Einschnürung des Montagebolzens einander gegenüberliegend angeordnet sein. Die Kopfenden können im Bereich von Endabschnitten gebildet sein, die in Bezug auf die Öffnung des Schneidwerkzeugs distal an den Hülsenbauteilen gebildet sind.

Der Montagebolzen kann mittels einer Verbindung ausgewählt aus der folgenden Gruppe an dem Schneidwerkzeug nicht lösbar montiert sein: Nietverbindung, Schweißverbindung, Klebeverbindung, Warmformverbindung, Kaltformverbindung und Lötverbindung.

In den zugeordneten Trägerabschnitten kann ein zur Rotationsachse radial verlaufendes Langloch gebildet sein, in das in einem zur Rotationsachse proximalen Bereich ein zum Montieren des Schneidwerkzeugs an dem Werkzeugträger genutzter Montagebolzen einführbar ist, wobei das Langloch zumindest in einem zur Rotationsachse distalen Bereich Eingriffabschnitte aufweisen kann, die entlang eines Langlochrandes gebildet sind und in die Einschnürung an dem Montagebolzen eingreifen, wenn der im Halteabschnitt des Schneidwerkzeugs aufgenommene Montagebolzen beim Montieren der Schneidwerkzeugs aus dem proximalen Bereich des Langloches in den Bereich des Langlochs mit den Eingriffabschnitten verlagert ist.

Es kann vorgesehen sein, dass in den zugeordneten Trägerabschnitten einander gegenüberliegende und sich in Längsrichtung des Langloches erstreckende Vorsprünge gebildet sind, die eine Rotation des Schneidwerkzeugs um den Montagebolzen begrenzen oder im Wesentlichen vollständig unterbinden, wenigstens dann, wenn der im Halteabschnitt des Schneidwerkzeugs aufgenommene Montagebolzen in einer radial inneren Langlochhälfte angeordnet ist. Die sich in Längsrichtung des Langloches erstreckenden Vorsprünge sichern das Schneidwerkzeug gegen ein unbeabsichtigtes Herausschleudern, also ein Lösen von dem Werkzeugträger, insbesondere dann, wenn im Betrieb das Schneidwerkzeug auf ein Hindernis trifft, welches eine radial nach innen gerichtete Verschiebung des Schneidwerkzeugs längs des Langloches verursacht. Diese im Betrieb unbeabsichtigte Verlagerung des Schneidwerkzeugs radial nach innen, also auf die Rotationsachse des Werkzeugträgers hin, führt dazu, dass der Halteabschnitt des Schneidwerkzeugs in dem Bereich der Vorsprünge verlagert wird oder sich weiter in deren Bereich hinein bewegt, wodurch die seitlichen Vorsprünge ihre Führungs- und / oder Anschlagsfunktion erweitern oder überhaupt erst ausbilden können. Das Schneidwerkzeug wird auf diese Weise zusätzlich gegen ein unbeabsichtigtes Herausschleudern gesichert, insbesondere beim harten Auftreffen des Schneidwerkzeugs auf ein Hindernis im Betrieb.

Darüber hinaus übernehmen die Vorsprünge bei der Montage und der Demontage des Schneidwerkzeugs eine Führungsfunktion, indem zumindest der Halteabschnitt des Schneidwerkzeugs beim Verschieben des Montagebolzens in dem Langloch während der Montage / Demontage hierzwischen geführt wird.

Die Vorsprünge sind vorzugsweise in einem Bereich gebildet, der sich radial innen liegend an den zur Rotationsachse proximalen Langlochabschnitt anschließt. Aber auch ein teilweises oder vollständiges Überlappen mit wenigstens einem Teil des Langloches kann vorgesehen sein.

Das Schneidwerkzeug kann in dem zugeordneten Werkzeugträgerabschnitt ohne Zwangsmittel aufgenommen und gesichert sein, also insbesondere ohne eine Schraubverbindung. Ist das Schneidwerkzeug an dem Werkzeugträger beispielsweise zwischen einer montierten Stellung, in welcher das Schneidwerkzeug an dem Werkzeugträger gesichert ist, und einer Demontagestellung, in welcher das Schneidwerkzeug von dem Werkzeugträger abgenommen werden kann, lediglich mittels einer radialen Verschiebung verlagerbar, ohne das es dem Lösen einer speziellen Befestigung bedarf, kann diese Befestigungsart auch als Schnellverschluss bezeichnet werden.

Das Langloch kann auf einer Werkzeugträgerunterseite gebildet sein, zum Beispiel einem Flachstahlbauteil. In einer Ausgestaltung kann vorgesehen sein, dass das Langloch mit Hilfe eines auf der Unterseite der Trägerscheibe aufgebrachten Funktionsbauteils gebildet ist. Ein überstehender Bolzenkopf des Montagebolzens kann dann in einem Raum zwischen Trägerscheibe und Funktionselement geführt werden. Bei dieser oder anderen Ausgestaltungen kann vorgesehen sein, dass das Langloch im Bereich eines zur Rotationsachse proximalen Endes offen ist. Durch das offene Ende ist dann beispielsweise der Montagebolzen in das Langloch einführbar. Die Eingriffabschnitte des Langloches können sich dann bedarfsweise über die gesamte Länge des Langloches erstrecken. Vorzugsweise sind auch die Vorsprünge auf der Werkzeugunterseite angeordnet.

Es kann vorgesehen sein, dass auf einer Werkzeugträgeroberseite ein weiteres Langloch gebildet ist, welches wenigstens abschnittsweise mit dem Langloch überlappt und ein Bolzenende des Montagebolzens führend aufnimmt, insbesondere seitlich führend. Das Langloch kann in der Trägerscheibe gebildet sein. Das Bolzenende des Montagebolzens kann vollständig oder teilweise in dem Langloch aufgenommen sein. Vorzugsweise erfolgt die Führung des Bolzenendes in dem weiteren Langloch entlang eines äußeren Umfangs des Bolzens. In einer Ausgestaltung weist das weitere Langloch eine im Wesentlichen gleichbleibende Lochbreite über seine Länge auf.

Eine Ausführungsform kann vorsehen, dass zur Rotationsachse distale Enden der Vorsprünge mit zugeordneten, zur Rotationsachse proximalen Eckbereichen im Haltabschnitt des Schneidwerkzeugs für das Schneidwerkzeug einen das Schneidwerkzeug im Mäh- oder Häckselbetrieb in einer Nutzungsstellung sichernden Rotationshemm-Mechanismus hinsichtlich der Rotation des Schneidwerkzeugs um den Montagebolzen bilden, welcher beim Überschreiten einer im Mäh- oder Häckselbetrieb auf das Schneidwerkzeug einwirkenden Schwellwertkraft eine Rotation des Schneidwerkzeugs aus der Nutzungsstellung heraus freigibt. Im normalen Betrieb sichert der Rotationshemm-Mechanismus das Schneidwerkzeug gegen eine Rotation aus der Nutzungsstellung, indem ein- oder beidseitig der proximale Eckbereich am Halteabschnitt des Schneidwerkzeugs und das distale Ende der Vorsprünge sich aufeinander abstützen, wobei eine begrenzte Schwenkbewegung bedarfsweise vorgesehen sein kann. Trifft das Schneidwerkzeug nun auf ein Hindernis im Mäh- oder Häckselbetrieb, so wirkt auf das Schneidwerkzeug eine Kraft, die größer ist als der Widerstand beim Schneiden der Pflanzen, sodass der Rotationshemm-Mechanismus überwunden wird, wodurch eine Rotation des Schneidwerkzeugs aus der Nutzungsstellung heraus freigegeben wird. Hierdurch wird eine Beschädigung des Schneidwerkzeugs beim leichten Auftreffen auf Hindernisse verhindert. Das Schneidwerkzeug kann unter Überwindung des Rotationshemm-Mechanismus solchen leichten Hindernissen ausweichen. Kommt es beim Betrieb zu einem härteren Auftreffen auf ein Hindernis, wird häufig zusätzlich eine Verlagerung des Schneidwerkzeugs radial nach innen zur Rotationsachse hin ausgelöst. Für diesen Fall wirken dann die sich in Längsrichtung des Langloches erstreckenden Vorsprünge als Sicherung für das Schneidwerkzeug.

Die Vorsprünge können mittels eines auf der Werkzeugträgerunterseite angeordneten U-förmigen Aufsatzelementes gebildet sein. Beispielsweise kann das Aufsatzelement mittels eines U-Rohrabschnitts hergestellt sein. Das Aufsatzelement ist vorzugsweise auf der Unterseite der Trägerscheibe montiert, bevorzugt mittels Schweißen.

Es kann vorgesehen sein, dass die Vorsprünge in einem zur Rotationsachse proximalen Endbereich zur Rotationsachse hin schräg abfallend gebildet sind. Alternativ oder ergänzend können die Vorsprünge radial nach außen schräg abfallend gebildet sein.

An der Werkzeugträgerscheibe können umlaufend und im Wesentlichen gleich beabstandet wenigstens drei Trägerabschnitte gebildet sein. Beispielsweise können drei Werkzeugträgerabschnitte mit einem jeweiligen Schneidwerkzeug vorgesehen sein, die umlaufend in einem Abstand von etwa 120° angeordnet sind.

Die Schneidwerkzeuge können an dem Werkzeugträger montagewerkzeugfrei montierbar und demontierbar sein. Eine solche montagewerkzeugfreie Handhabung zum Montieren und Demontieren des Schneidwerkzeugs ist beispielsweise dann gegeben, wenn das Schneidwerkzeug mit dem hieran aufgenommenen Montagebolzen lediglich radial nach Außen von der Rotationsachse weg (Montage) und radial nach Innen zur Rotationsachse hin (Demontage) verlagert werden muss, um das Schneidwerkzeug an dem Werkzeugträger anzubringen oder es hiervon zu lösen. Die in die Einschnürung des Montagebolzens eingreifenden Eingriffabschnitte sichern das Schneidwerkzeug in der zur Rotationsachse radial außen liegenden Stellung gegen ein unbeabsichtigtes Lösen.

Die Schneidwerkzeuge können an dem Werkzeugträger sich im Mäh- oder Häckselbetrieb selbst ausrichtend gelagert sein. Aufgrund einer Drehbarkeit des Schneidwerkzeugs um den Montagebolzen richtet sich das Schneidwerkzeug beim Rotieren der Trägerscheibe um die Rotationsachse im Wesentlichen in Längsrichtung des Langloches aus. Im Übrigen wird die Ausrichtung des Schneidwerkzeugs vorzugsweise aufgrund des Zusammenwirkens mit den Vorsprüngen unterstützt.

Es kann vorgesehen sein, dass die Schneidwerkzeuge an dem Werkzeugträger sich im Mäh- oder Häckselbetrieb in der Nutzungsstellung selbst sichernd gelagert sind. Eine Selbstsicherung ist insbesondere dadurch gegeben, dass der Montagebolzen zusammen mit dem Schneidwerkzeug im Betrieb aufgrund der Rotation der Trägerscheibe stets radial nach Außen gedrückt wird.

### Beschreibung von Ausführungsbeispielen

Im Folgenden werden weitere Ausführungsbeispielen unter Bezugnahme auf Figuren einer Zeichnung näher erläutert. Hierbei zeigen:
- Fig. 1: eine schematische Darstellung einer Anordnung für eine Mäh- oder Häckselmaschine von schräg oben;
- Fig. 2: eine schematische Darstellung der Anordnung aus Fig. 1 von schräg unten;
- Fig. 3: eine weitere schematische Darstellung der Anordnung aus Fig. 1 von schräg unten, wobei ein schneidwerkzeug entfernt ist;
- Fig. 4: eine schematische perspektivische Darstellung eines Schneidwerkzeugs mit hieran nicht lösbar montiertem Montagebolzen;
- Fig. 5: eine schematische perspektivische Darstellung der Anordnung mit Schneidwerkzeug und Montagebolzen im Schnitt bei der Montage des Montagebolzens und nach Abschluss der Montage;
- Fig. 6: eine schematische perspektivische Darstellung der Anordnung aus Fig. 5 im Schnitt;
- Fig. 7: eine schematische Darstellung im Schnitt, wenn die Anordnung mit Schneidwerkzeug und Montagebolzen an einer Trägerscheibe montiert ist;
- Fig. 8: eine schematische Darstellung der Anordnung aus Fig. 1 von schräg unten, wobei ein neu montiertes Schneidwerkzeug mit Montagebolzen (vgl. Schneidwerkzeug links oben) in einem zugeordneten Werkzeugträgerabschnitt angeordnet sind;
- Fig. 9: eine schematische Darstellung der Anordnung nach Fig. 1 von schräg unten, wobei im Unterschied zu Fig. 8 das neu montierte Schneidwerkzeug in die Nutzungsstellung verlagert ist;
- Fig. 10: eine schematische Darstellung der Anordnung nach Fig. 1 von schräg unten, wobei das neu montierte Schneidwerkzeug aus der Nutzungsstellung heraus gedreht ist; und
- Fig. 11: schematische Darstellungen einer weiteren Ausführung eines Schneidwerkzeugs mit hieran nicht lösbar montiertem Montagebolzen von vorn und im Schnitt, wobei im Bereich der Einschnürung des Montagebolzen ein Ring angeordnet ist.

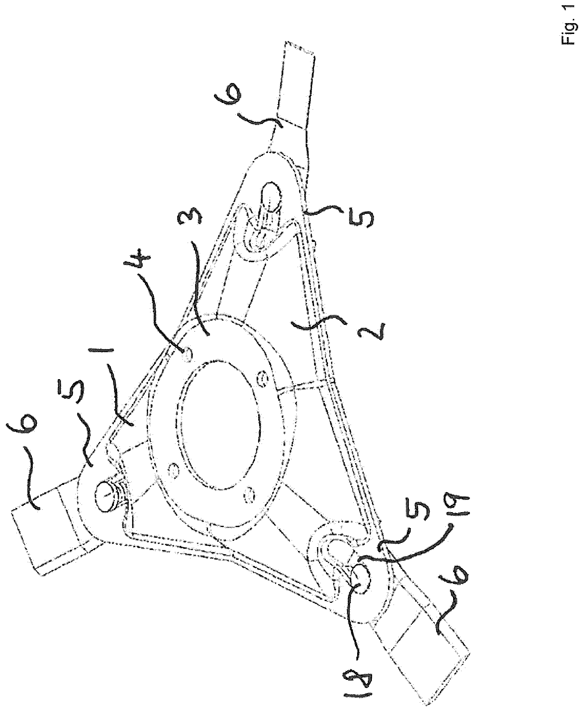

Fig. 1 zeigt eine schematische Darstellung einer Anordnung für eine Mäh- oder Häckselmaschine mit einem Werkzeugträger 1, der mit einer Trägerscheibe 2 gebildet ist. Die Trägerscheibe 2 verfügt über einen eine Rotationsachse definierenden Montageabschnitt 3 mit Bohrungen 4, die zur Aufnahme von Schrauben oder Bolzen bei der Montage des Werkzeugträgers 1 in einem Mähwerk dienen.

An der Trägerscheibe 2 sind umlaufend im Abstand von etwa 120° drei Trägerabschnitte 5 gebildet, in denen jeweils ein Schneidwerkzeug 6 montiert ist.

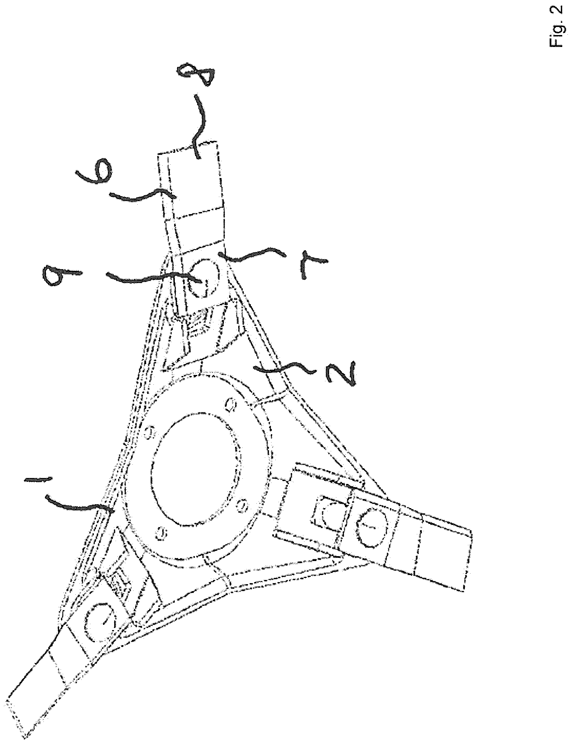

Fig. 2 zeigt eine schematische Darstellung der Anordnung aus Fig. 1 von schräg unten. Die Schneidwerkzeuge 6 verfügen jeweils über einen Halteabschnitt 7, an dem zur Rotationsachse radial außen liegend ein Schneidmesser 8 gebildet ist. Montiert sind die Schneidwerkzeuge 6 im zugeordneten Trägerabschnitt 5 mit Hilfe eines Montagebolzens 9, der eine lokale Drehachse für das Schneidwerkzeug 6 bildet. Im Mäh- oder Häckselbetrieb richten sich die Schneidwerkzeuge selbsttätig in der in Fig. 2 dargestellten Art und Weise aus.

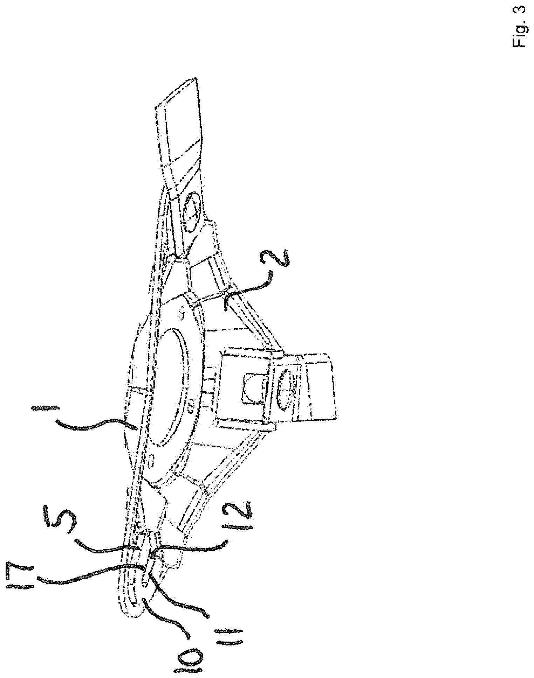

Fig. 3 zeigt die Anordnung aus Fig. 1 schräg von unten. Aus Fig. 3 ergibt sich, dass im Trägerabschnitt 5, in welchem die Schneidwerkzeuge 6 montiert sind, auf der Unterseite der Trägerscheibe 2 ein Flachbauteil 10 mit einem Langloch 11 angeordnet ist, welches an seinem zur Rotationsachse der Trägerscheibe 2 proximalen Ende 12 offen ist.

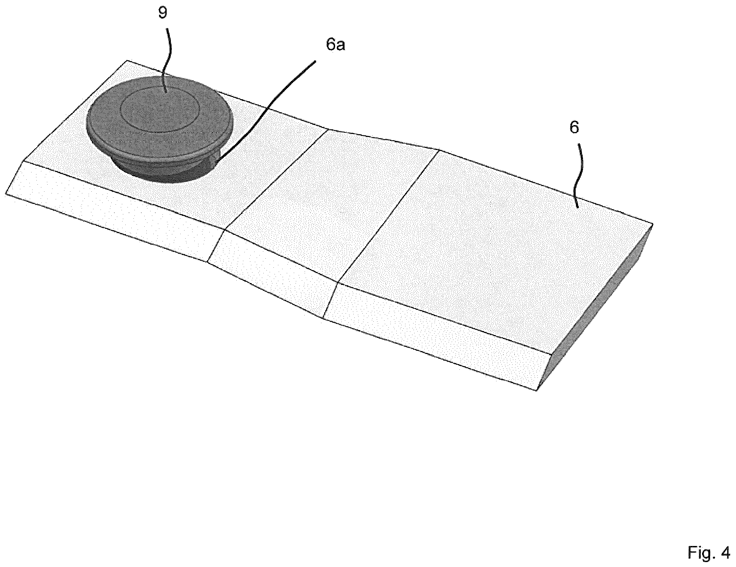

Fig. 4 zeigt eine schematische perspektivische Darstellung des Schneidwerkzeugs 6 mit dem hieran montierten Montagebolzen 9. Dieser ist in einer zugeordneten Öffnung 6a nicht lösbar montiert.

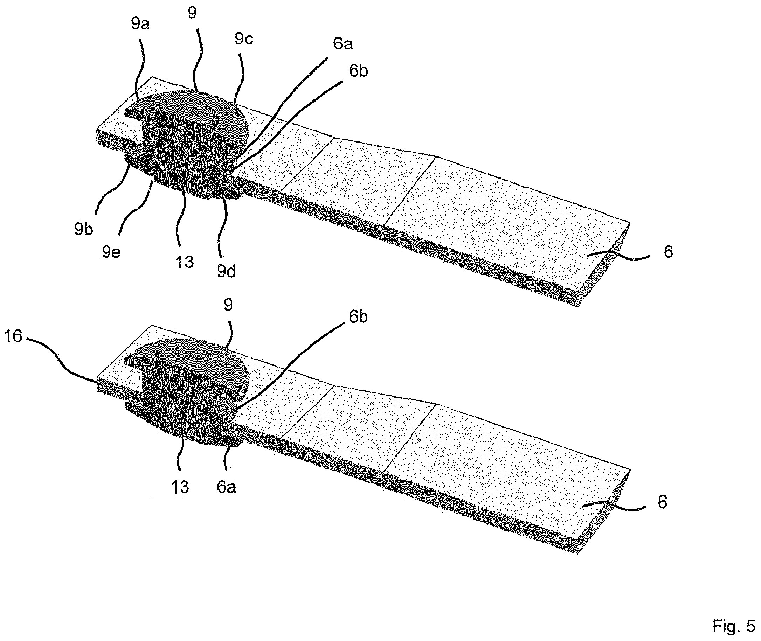

Fig. 5 zeigt eine schematische perspektivische Darstellung der Anordnung mit Schneidwerkzeug 6 und Montagebolzen 9 im Schnitt während der Montage des Montagebolzens 9 und nach Abschluss der Montage (vgl. Abbildung unten). Der Montagebolzen 9 ist mit einem oberen und einem unteren Hülsenbauteil 9a, 9b gebildet. Das obere und das untere Hülsenbauteil 9a, 9b liegen sich im Bereich der Öffnung 6a einander gegenüber, wenn die Montagebolzen 9 in Bezug auf seine Längserstreckung im Wesentlichen mittig in der Öffnung 6a angeordnet ist. An dem oberen und dem unteren Hülsenbauteil 9a, 9b sind Bolzenkopfenden 9c, 9d ausgebildet, deren äußerer Umfang größer als eine Öffnungsfläche 6b der Öffnung 6a ist, sodass der Montagebolzen 9 nach dem Montieren nicht lösbar in der Öffnung 6a angeordnet ist.

Gemäß der Darstellung in Fig. 5 ist die Öffnungsfläche 6b der Öffnung 6a größer als der Montagebolzen 9 im mittleren Bereich, sodass der Montagebolzen 9 lose in der Öffnung 6a aufgenommen ist, beispielsweise relativ zu seiner Längsachse gekippt werden kann.

Eine innere Öffnung 9e des oberen und des unteren Hülsenbauteils 9a, 9b erweitert sich konisch nach außen. Ein Kernstift oder Bolzen 13 wird hierin formschlüssig eingebracht (vgl. untere Darstellung in Fig. 5), um den Montagebolzen 9 nicht lösbar an dem Schneidwerkzeug 6 zu sichern.

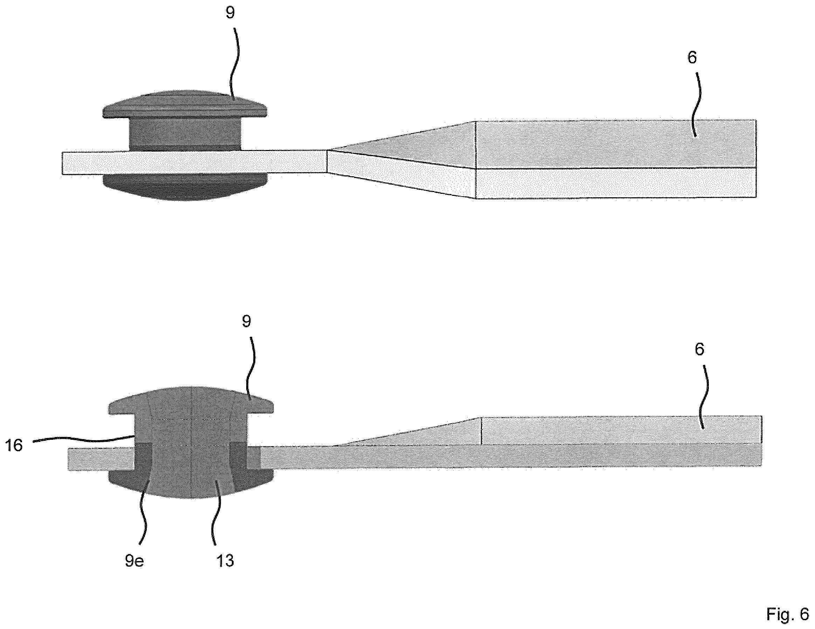

Fig. 6 zeigt die Anordnungen aus Fig. 5 von vorn und im Schnitt.

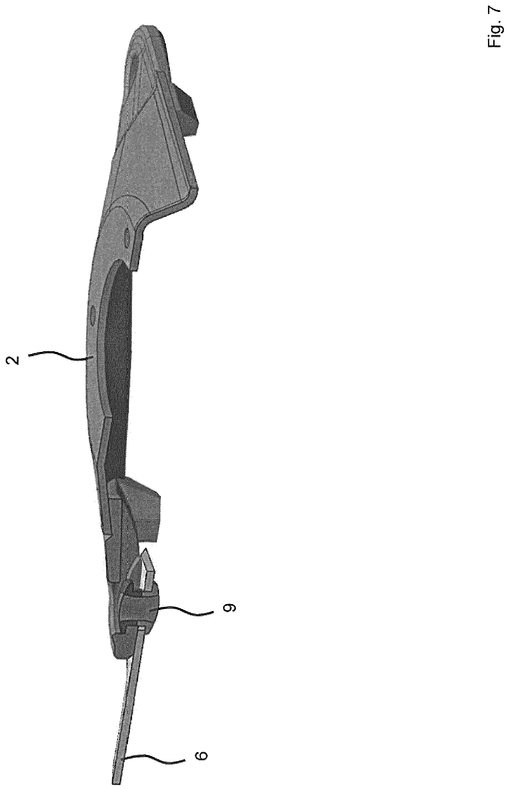

Fig. 7 zeigt eine schematische Darstellung im Schnitt, wenn die Anordnung mit Schneidwerkzeug 6 und Montagebolzen 9 an der Trägerscheibe 2 montiert ist.

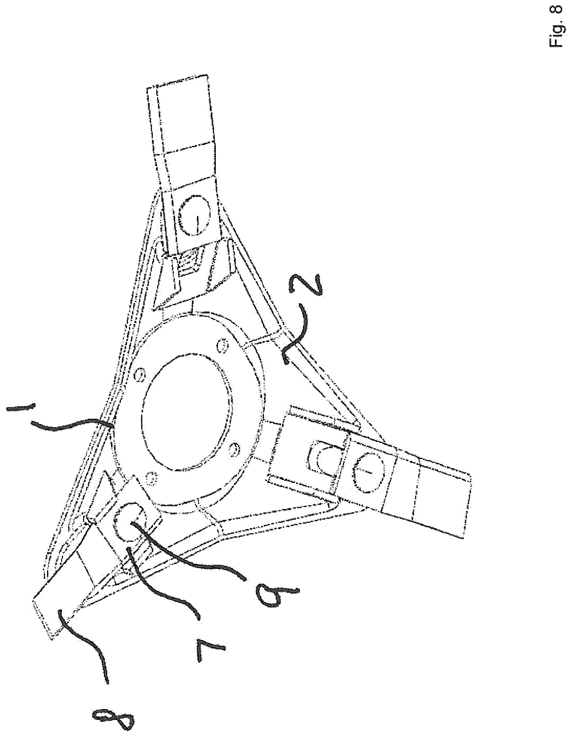

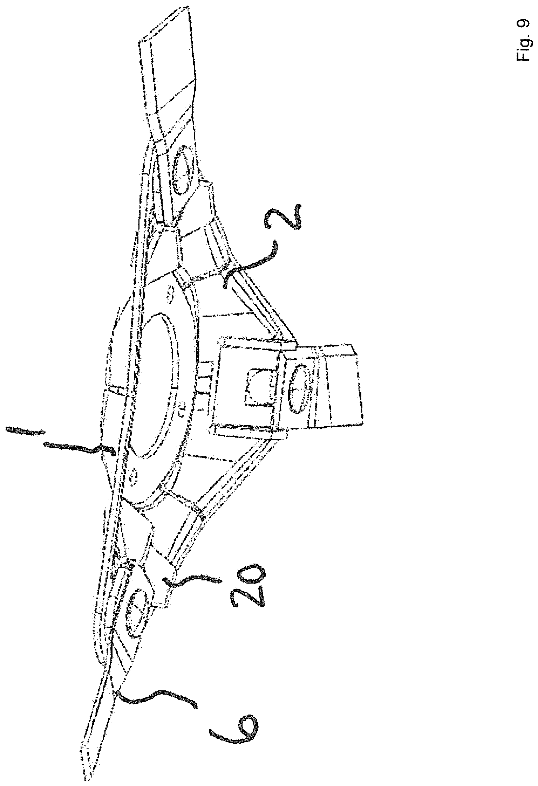

Bei der Montage des Schneidwerkzeugs 6 mit Hilfe des Montagebolzens 9 aus den Fig. 4 bis 6 (vgl. Fig. 8 im Unterschied zu Fig. 3) wird ein in eine Bohrung 15 im Schneidwerkzeug 6 eingeführter Abschnitt des Montagebolzens 9, der mit einer Einschnürung 16 versehen ist (vgl. Fig. 5 und 6), über das offene proximale Ende 14 in das Langloch 11 eingeschoben, sodass in die Einschnürung 16 seitliche Eingriffabschnitte 17 des Langlochs 11 eingreifen. Fig. 9 zeigt hierbei eine Stellung des Schneidwerkzeugs 6, in welcher der Montagebolzen 9 gerade noch im oder vor dem offenen proximalen Ende 14 des Langloches 11 angeordnet ist.

Fig. 9 zeigt dann das neu montierte Schneidwerkzeug 6 in der Nutzungsstellung. Ausgehend von Fig. 8 wurde das Schneidwerkzeug 6 also bezüglich der Rotationsachse der Trägerscheibe 2 längs des Langloches 11 radial nach außen bewegt, wobei der Montagebolzen 9 hierbei entlang des Langloches 11 geführt wird. Aus Fig. 1 ergibt sich in diesem Zusammenhang, dass ein hinsichtlich der Einschnürung 16 dickeres Bolzenende 18 des Montagebolzens 9 hierbei in einem weiteren Langloch 19 auf der Oberseite der Trägerscheibe 2 geführt wird.

Wie sich insbesondere aus den Fig. 8 und 9 ergibt, sind parallele zu Seitenkanten des Langloches 11 Vorsprünge 20 gebildet, die das Schneidwerkzeug sichern gegen unbeabsichtigtes Herausschleudern im Betrieb. Weiterhin wird der Halteabschnitt 7 des Schneidwerkzeugs 6 beim Montieren / Demontieren zwischen den Vorsprüngen 20 geführt.

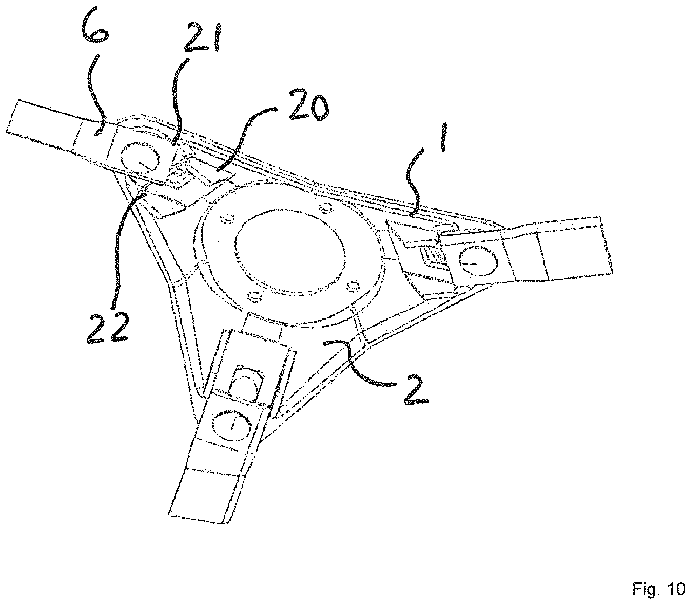

Fig. 10 zeigt eine weitere schematische Darstellung der Anordnung nach Fig. 1 von schräg unten, wobei das neu montierte Schneidwerkzeug 6 aus der radial nach außen gerichteten Nutzungsstellung (vgl. Schneidwerkzeug links oben in Fig. 5 und 6) beim Mähen oder Häcksein herausgedreht wurde, was insbesondere aufgrund des Auftreffens des Schneidwerkzeugs 6 auf ein Hindernis verursacht werden kann. Hierzu war eine Rückhaltekraft zu überwinden, die aus dem Zusammenwirken zur Rotationsachse der Trägerscheibe 2 distaler Ecken 21 der Vorsprünge 20 und zur Rotationsachse proximaler Eckabschnitte 22 des Halteabschnitts 7 sich ergibt. Alternativ kann vorgesehen sein, dass es an einem solchen Rückhalte- oder Hemmmechanismus fehlt, was insbesondere dadurch erreichbar ist, dass die distalen Ecken 21 der Vorsprünge 20 und die proximalen Ecken 22 des Halteabschnittes 7 der Schneidwerkzeuge 6 beabstandet sind, wenn sich das Schneidwerkzeug 6 in der zur Rotationsachse radial außen liegenden Nutzungsstellung befindet.

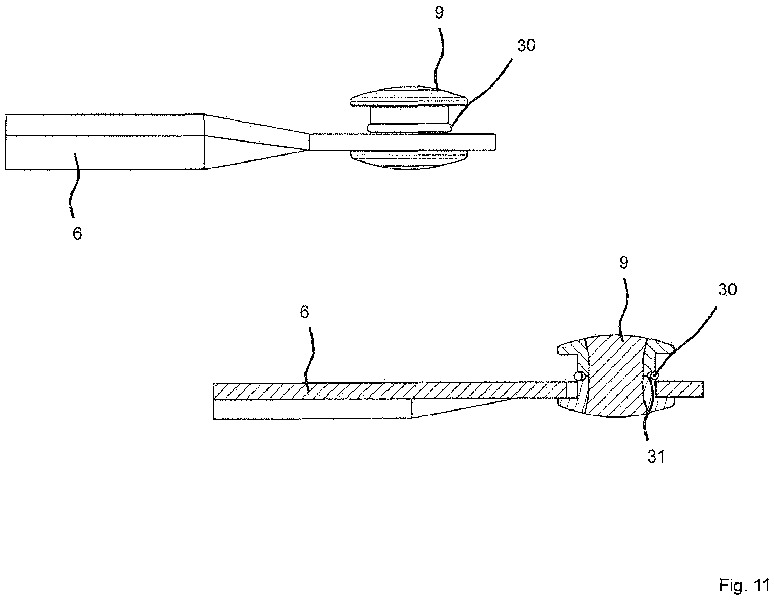

Fig. 11 zeigt schematische Darstellungen einer weiteren Ausführung des Schneidwerkzeugs 6 mit hieran nicht lösbar montiertem Montagebolzen 9 von vorn und im Schnitt, wobei im Bereich der Einschnürung 16 des Montagebolzen 9 ein Ring 30 angeordnet ist, der beispielweise als ein Sicherungsring ausgeführt ist. Der Ring 30 hält oder sichert den Montagebolzen 9 in einer Richtung quer zur Längsrichtung des Schneidwerkzeugs 6 in seiner Relativlage in Bezug auf das Schneidwerkzeug 6, zum Beispiel in einer in Bezug auf die Öffnung 6a asymmetrischen Lage. Hierbei kann in Grenzen eine Bewegung des Montagebolzens 9 in der Richtung quer zur Längsrichtung des Schneidwerkzeugs 6 ermöglicht sein.

Der Ring 30 kann lösbar oder nicht lösbar am Montagebolzen 9 montiert sein. Der Ring 30 ist bei dem gezeigten Beispiel teilweise in einer zugeordneten Nut 31 aufgenommen, die sich umlaufend am Montagebolzen 9 erstreckt.

## Patentansprüche

1. Anordnung für ein Mähwerk einer Mäh- oder Häckselmaschine, mit
- einem Werkzeugträger (1), welcher mit einer Trägerscheibe (2) gebildet und konfiguriert ist, um eine Rotationsachse drehbar an einem Mähwerk einer Mäh- oder Häckselmaschine montiert zu werden; und
- Schneidwerkzeugen (6), die jeweils mit einem zur Rotationsachse radial außen liegenden Schneidmesser (8) und einem zur Rotationsachse radial innen liegenden Halteabschnitt (7) gebildet und in einem zugeordneten Trägerabschnitt (5) lösbar an der Trägerscheibe (2) montiert sind, wobei die Schneidwerkzeuge (6) an dem Werkzeugträger (1) jeweils mittels eines Montagebolzens (9) montiert sind, der an den Schneidwerkzeugen (6) jeweils nicht lösbar montiert ist;
**dadurch gekennzeichnet, dass** der Montagebolzen (9) in einer nicht montierten Stellung des Schneidwerkzeugs (6) relativ zu diesem verlagerbar in einer zugeordneten Öffnung (6a) des Schneidwerkzeugs (6) angeordnet ist.

2. Anordnung nach Anspruch 1, **dadurch gekennzeichnet, dass** der Montagebolzen (9) in der nicht montierten Stellung des Schneidwerkzeugs (6) relativ zur Schneidwerkzeugfläche verkippbar in der zugeordneten Öffnung (6a) des Schneidwerkzeugs (6) angeordnet ist.

3. Anordnung nach mindestens einem der vorangehenden Ansprüche, **dadurch gekennzeichnet, dass** gegenüberliegende Kopfenden (9e, 9d) des Montagebolzens (9), zwischen denen eine Einschnürung (16) angeordnet ist, jeweils eine Kopffläche aufweisen, die größer ist als eine Öffnungsfläche (6b) der Öffnung (6a), in welcher der Montagebolzen (9) angeordnet ist.

4. Anordnung nach mindestens einem der vorangehenden Ansprüche, **dadurch gekennzeichnet, dass** der Montagebolzen (9) mehrstückig ausgeführt ist.

5. Anordnung nach Anspruch 4, **dadurch gekennzeichnet, dass** bei dem Montagebolzen (9) Hülsenbauteile (9a, 9b) mittels eines Kernstifts (13) nicht lösbar miteinander verbunden sind.

6. Anordnung nach mindestens einem der vorangehenden Ansprüche, soweit auf Anspruch 4 rückbezogen, **dadurch gekennzeichnet, dass**
- in den zugeordneten Trägerabschnitten (5) ein zur Rotationsachse radial verlaufendes Langloch (11) gebildet ist, in das in einem zur Rotationsachse proximalen Bereich ein zum Montieren des Schneidwerkzeugs (6) an dem Werkzeugträger (1) genutzter Montagebolzen (9) einführbar ist, und
- das Langloch (11) zumindest in einem zur Rotationsachse distalen Bereich Eingriffabschnitte (17) aufweist, die entlang eines Langlochrandes gebildet sind und in die Einschnürung (16) an dem Montagebolzen (9) eingreifen, wenn der im Halteabschnitt (7) des Schneidwerkzeugs (6) aufgenommene Montagebolzen (9) beim Montieren der Schneidwerkzeugs (6) aus dem proximalen Bereich des Langloches (11) in den Bereich des Langlochs (11) mit den Eingriffabschnitten (17) verlagert ist.

7. Anordnung nach Anspruch 6, **dadurch gekennzeichnet, dass** in den zugeordneten Trägerabschnitten (5) einander gegenüberliegende und sich in Längsrichtung des Langloches (11) erstreckende Vorsprünge (20) gebildet sind, die eine Rotation des Schneidwerkzeuges (6) um den Montagebolzen (9) begrenzen oder im Wesentlichen vollständig unterbinden, wenigstens dann, wenn der im Halteabschnitt (7) des Schneidwerkzeuges (6) aufgenommene Montagebolzen (9) in einer radial inneren Langlochhälfte angeordnet ist.

8. Anordnung nach Anspruch 7, **dadurch gekennzeichnet, dass** das Langloch (11) auf einer Werkzeugträgerunterseite gebildet ist.

9. Anordnung nach Anspruch 7 oder 8, **dadurch gekennzeichnet, dass** auf einer Werkzeugträgeroberseite ein weiteres Langloch (19) gebildet ist, welches wenigstens abschnittsweise mit dem Langloch (11) überlappt und ein Bolzenende (18) des Montagebolzens (9) führend aufnimmt.

10. Anordnung nach mindestens einem der vorangehenden Ansprüche, **dadurch gekennzeichnet, dass** die Schneidwerkzeuge (6) an dem Werkzeugträger (1) sich im Mäh- oder Häckselbetrieb selbst ausrichtend gelagert sind.

11. Anordnung nach mindestens einem der vorangehenden Ansprüche, **dadurch gekennzeichnet, dass** die Schneidwerkzeuge (6) an dem Werkzeugträger (1) sich im Mäh- oder Häckselbetrieb in der Nutzungsstellung selbst sichernd gelagert sind.

12. Ersatz-Schneidwerkzeug für eine Anordnung nach mindestens einem der vorangehenden Ansprüche, wobei ein Montagebolzen (9) an dem Schneidwerkzeug (6) nicht lösbar montiert ist, **dadurch gekennzeichnet, dass** der Montagebolzen (9) relativ zum Schneidwerkzeug (6) verlagerbar in einer zugeordneten Öffnung (6a) des Schneidwerkzeugs (6) angeordnet ist.

13. Mähwerk für eine Mäh- oder Häckselmaschine, mit einer Antriebseinrichtung, die eine rotierende Antriebsbewegung bereitstellt, und einer an die Antriebseinrichtung koppelnden Anordnung nach mindestens einem der Ansprüche 1 bis 11.

## Claims

1. Arrangement for a mower of a mowing or chopping machine, comprising
- a tool carrier (1) which is formed with a carrier disk (2) and is configured to be mounted on a mower of a mowing or chopping machine so as to be rotatable about an axis of rotation; and
- cutting tools (6), which are each formed having a cutting blade (8) located radially outwardly with respect to the axis of rotation and a holding portion (7) located radially inwardly with respect to the axis of rotation and which are detachably mounted on the carrier disk (2) in an associated carrier portion (5), the cutting tools (6) being mounted on the tool carrier (1) in each case by means of a mounting bolt (9) which is non-detachably mounted on the cutting tools (6) in each case;
**characterized in that** when the cutting tool (6) is in an unmounted position, the mounting bolt (9) is arranged in an associated opening (6a) of the cutting tool (6) so as to be displaceable relative thereto.

2. Arrangement according to claim 1, **characterized in that** when the cutting tool (6) is in the unmounted position, the mounting bolt (9) is arranged in the associated opening (6a) of the cutting tool (6) so as to be tiltable relative to the cutting tool surface.

3. Arrangement according to at least one of the preceding claims, **characterized in that** opposite head ends (9e, 9d) of the mounting bolt (9), between which a constriction (16) is arranged, each have a head surface which is larger than an opening surface (6b) of the opening (6a) in which the mounting bolt (9) is arranged.

4. Arrangement according to at least one of the preceding claims, **characterized in that** the mounting bolt (9) has a multi-part design.

5. Arrangement according to claim 4, **characterized in that** in the mounting bolt (9), sleeve components (9a, 9b) are non-detachably connected to one another by means of a core pin (13).

6. Arrangement according to at least one of the preceding claims, insofar as referring to claim 4, **characterized in that**
- a slot (11) extending radially with respect to the axis of rotation is formed in the associated carrier portions (5), into which slot a mounting bolt (9) used to mount the cutting tool (6) on the tool carrier (1) can be inserted in a region that is proximal to the axis of rotation, and
- the slot (11) has engagement portions (17) at least in a region that is distal to the axis of rotation, which portions are formed along the edge of a slot and engage in the constriction (16) on the mounting bolt (9) when the mounting bolt (9) received in the holding portion (7) of the cutting tool (6) is displaced from the proximal region of the slot (11) into the region of the slot (11) having the engagement portions (17) during the mounting of the cutting tool (6).

7. Arrangement according to claim 6, **characterized in that** projections (20) arranged opposite one another and extending in the longitudinal direction of the slot (11) are formed in the associated carrier portions (5), which projections limit or substantially completely prevent a rotation of the cutting tool (6) about the mounting bolt (9) at least when the mounting bolt (9) received in the holding portion (7) of the cutting tool (6) is arranged in a radially inner slot half.

8. Arrangement according to claim 7, **characterized in that** the slot (11) is formed on an underside of the tool carrier.

9. Arrangement according to either claim 7 or claim 8, **characterized in that** a further slot (19) is formed on an upper side of the tool carrier, which further slot overlaps with the slot (11) at least in portions and guidingly receives a bolt end (18) of the mounting bolt (9).

10. Arrangement according to at least one of the preceding claims, **characterized in that** the cutting tools (6) are supported on the tool carrier (1) so as to be self-aligning during the mowing or chopping operation.

11. Arrangement according to at least one of the preceding claims, **characterized in that** the cutting tools (6) are supported on the tool carrier (1) so as to be self-securing in the use position during the mowing or chopping operation.

12. Replacement cutting tool for an arrangement according to at least one of the preceding claims, a mounting bolt (9) being non-detachably mounted on the cutting tool (6), **characterized in that** the mounting bolt (9) is arranged in an associated opening (6a) of the cutting tool (6) so as to be displaceable relative to the cutting tool (6).

13. Mower for a mowing or chopping machine, comprising a drive device which provides a rotating drive movement, and an arrangement according to at least one of claims 1 to 11 which is coupled to the drive device.

## Revendications

1. Agencement pour un mécanisme de tonte d'une faucheuse ou d'un hache-paille, comportant
- un porte-outil (1) formé avec un disque de support (2) et conçu pour être monté à rotation sur un mécanisme de tonte d'une faucheuse ou d'un hache-paille autour d'un axe de rotation ; et
- des outils de coupe (6) formés chacun d'une lame de coupe (8) située radialement à l'extérieur par rapport à l'axe de rotation et d'une section de retenue (7) située radialement à l'intérieur par rapport à l'axe de rotation, et montés de manière amovible sur le disque de support (2) dans une section de support associée (5), les outils de coupe (6) étant montés sur le porte-outil (1) respectivement au moyen d'un boulon de montage (9) qui est monté de manière inamovible sur les outils de coupe (6) respectifs ;
**caractérisé en ce que** le boulon de montage (9) est disposé dans une ouverture (6a) associée de l'outil de coupe (6) de manière à pouvoir être déplacé par rapport à l'outil de coupe (6) dans une position non montée de celui-ci.

2. Agencement selon la revendication 1, **caractérisé en ce que** le boulon de montage (9) est disposé dans l'ouverture (6a) associée de l'outil de coupe (6) dans la position non montée de l'outil de coupe (6) de manière à pouvoir être basculé par rapport à la surface de l'outil de coupe.

3. Agencement selon au moins l'une des revendications précédentes, **caractérisé en ce que** des extrémités de tête opposées (9e, 9d) du boulon de montage (9), entre lesquelles se trouve un rétrécissement (16), présentent chacune une surface de tête qui est supérieure à une surface d'ouverture (6b) de l'ouverture (6a) dans laquelle le boulon de montage (9) est disposé.

4. Agencement selon au moins l'une des revendications précédentes, **caractérisé en ce que** le boulon de montage (9) est réalisé en plusieurs parties.

5. Agencement selon la revendication 4, **caractérisé en ce que** dans le boulon de montage (9), des éléments de manchon (9a, 9b) sont reliés de manière inamovible au moyen d'une broche-noyau (13).

6. Agencement selon au moins l'une des revendications précédentes, à condition qu'elle se rapporte à la revendication 4, **caractérisé en ce**
- **qu'**un trou oblong (11) s'étendant radialement par rapport à l'axe de rotation est formé dans les sections de support associées (5), dans lequel un boulon de fixation (9) servant au montage de l'outil de coupe (6) sur le porte-outil (1) peut être inséré dans une zone proximale par rapport à l'axe de rotation, et
- **que** le trou oblong (11) comporte, au moins dans une zone distale par rapport à l'axe de rotation, des sections de mise en prise (17) formées le long d'un bord du trou oblong et venant en prise dans le rétrécissement (16) du boulon de montage (9) lorsque le boulon de montage (9) reçu dans la section de retenue (7) de l'outil de coupe (6) est déplacé de la zone proximale du trou oblong (11) dans la zone du trou oblong (11) avec les sections de mise en prise (17) lors du montage de l'outil de coupe (6).

7. Agencement selon la revendication 6, **caractérisé en ce que** des saillies (20) sont formées dans les sections de support associées (5), lesquelles saillies sont opposées les unes aux autres et s'étendent dans la direction longitudinale du trou oblong (11) et limitent ou empêchent sensiblement entièrement une rotation de l'outil de coupe (6) autour du boulon de montage (9), au moins lorsque le boulon de montage (9) reçu dans la section de retenue (7) de l'outil de coupe (6) est disposé dans une moitié radialement intérieure du trou oblong.

8. Agencement selon la revendication 7, **caractérisé en ce que** le trou oblong (11) est formé sur une face inférieure d'un porte-outil.

9. Agencement selon la revendication 7 ou 8, **caractérisé en ce qu'**un autre trou oblong (19) est formé sur une face supérieur d'un porte-outil qui recouvre au moins dans certaines sections le trou oblong (11) et reçoit de manière guidée une extrémité de boulon (18) du boulon de montage (9).

10. Agencement selon au moins l'une des revendications précédentes, **caractérisé en ce que** les outils de coupe (6) sont montés sur le porte-outil (1) de manière à s'aligner automatiquement lors du fonctionnement de la faucheuse ou du hache-paille.

11. Agencement selon au moins l'une des revendications précédentes, **caractérisé en ce que** les outils de coupe (6) sont montés sur le porte-outil (1) de manière à être autobloquants dans la position d'utilisation lors du fonctionnement de la faucheuse ou du hache-paille.

12. Outil de coupe de remplacement pour un agencement selon au moins l'une des revendications précédentes, dans lequel un boulon de montage (9) est monté de manière inamovible sur l'outil de coupe (6), **caractérisé en ce que** le boulon de montage (9) est disposé dans une ouverture (6a) associée de l'outil de coupe (6) de manière déplaçable par rapport à l'outil de coupe (6).

13. Mécanisme de tonte d'une faucheuse ou d'un hache-paille, comportant un dispositif d'entraînement qui assure un mouvement d'entraînement rotatif, et un agencement selon au moins l'une des revendications 1 à 11 qui s'accouple au dispositif d'entraînement.
